# EUROPEAN PATENT SPECIFICATION

(11) **EP 0 736 987 B1**
(45) Date of publication and mention of the grant of the patent: **12.06.2002**
(21) Application number: 96302428.6
(22) Date of filing: 04.04.1996
(51) Int. Cl.: H04L 12/40, H04L 29/14

(54) **An electrical data transmission system**
Elektrisches Datenübertragungssystem
Système de transmission de données électriques

(30) Priority: 08.04.1995 GB 9507350
(43) Date of publication of application: 09.10.1996
(73) Proprietor: Land Rover Group Limited, Lighthorne, Warwick CV35 0RG (GB)
(72) Inventor: Greenwood, Jeremy John, Sutton Coldfield, West Midlands, B73 5LL (GB)
(74) Representative: Farrow, Robert Michael

(56) References cited:
- EP-A- 0 295 897
- US-A- 4 694 504

## Description

The present invention relates to an electrical data transmission system, and particularly but not exclusively to a serial link for an automotive multiplexed wiring system, the link interconnecting two modules of an electronic system for a motor vehicle.

It is known from US4694504, WO 90/15493, US4593282 and US5329531 to provide a communications system in which both synchronous and asynchronous communications can share the same communication medium. The communication medium is shared by prioritising the transmissions and allocating time slots for access to the data bus.

In all these prior art documents, the communications are either synchronous or asynchronous and always stay in that form. It is a problem with all the above mentioned systems that if there is a breakdown in the synchronous transmissions, it is necessary to re-transmit the data asynchronously.

Accordingly the invention provides an electrical data transmission system comprising first and second nodes connected by a serial link which includes at least two lines, wherein the system is operable in a first synchronous operating mode in which one of the lines acts as a data line and another of the lines acts as a synchronising line, and characterised in that the system is also operable in a second asynchronous operating mode in which the second node is adapted to receive data asynchronously from one of the lines, and the link is arranged normally to operate in the synchronous mode, and automatically to be reconfigured to operate in the asynchronous mode on detecting one of the lines as inoperative, the asynchronous data using the other of the lines.

The second node may be arranged such that it can receive data from either line in the asynchronous mode.

In the synchronous operating mode, signals may be sent between the nodes in either direction.

In the asynchronous operating mode, the system may be arranged to transmit signals between the first and second nodes in either direction.

The second node may have means operative to distinguish between a line carrying data and an inoperative line.

At least one of the lines may be adapted to carry data in encoded form, the data including an embedded clock.

The invention may also provide a method of operating a serial link for the transmission of data, the link having at least two lines interconnecting first and second nodes characterised in that the method comprises transmitting data synchronously over the lines in a normal mode of operation with one of the lines acting as a data line and another as a synchronising line and, if one of the lines fails, transmitting data asynchronously over the or at least one of the remaining lines in a failure mode.

The method may also provide for data transmission in either direction between the first and second node in the synchronous mode or in the asynchronous mode.

The method may include detecting line failure and, in response to such failure detection, automatically reconfiguring the second node to read received data asynchronously.

The method may also provide that the data transmitted in the normal mode is the same as the data transmitted in the failure mode.

The method may include, in the failure mode, reading the signal level of the transmitted data at a predetermined delay after a signal level transition in a predetermined direction.

The invention will now be described by way of example with reference to the accompanying drawings, in which:
figure 1 is a schematic diagram of a part of a multiplexed wiring system including a serial link according to the invention;
figure 2 is a timing diagram of signals carrying coded data on the serial link of figure 1;
figure 3 is a fragmentary timing diagram of the signals of figure 2 carrying coded "1" and "0" bits; and
figure 4 is a flow chart showing the selection of data reception path according to the invention.

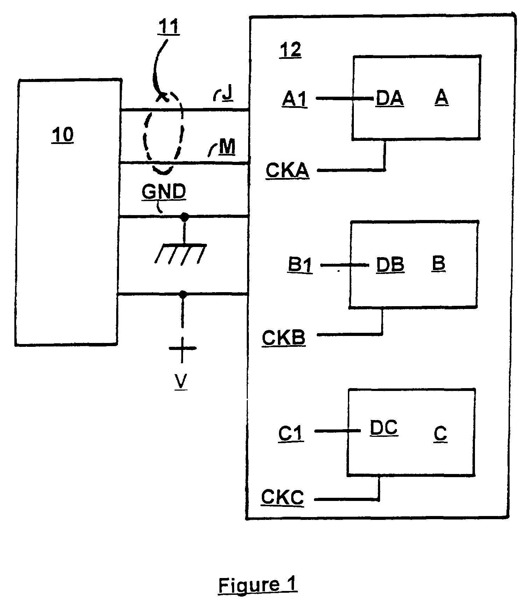

With reference to figure 1, part of a vehicle multiplexed wiring system comprises a first node performing the function of a master in the form of a body control module (BCM) 10, bi-directionally connected by a serial link 11 to a second node performing the function of a slave in the form of an application specific integrated circuit (ASIC) 12.

The serial link 11 comprises two lines J, M which are made of insulated copper wire. The BCM 10 and ASIC 12 are further connected to a common supply V and a common ground GND.

The ASIC 12 includes first, second and third shift registers A, B, C, each of which has a data input A1, B1, C1 and a clock input CKA, CKB, CKC respectively. The signals input through the data inputs A1, B1, C1 are derived by the ASIC 12 from the signals on the J and M lines.

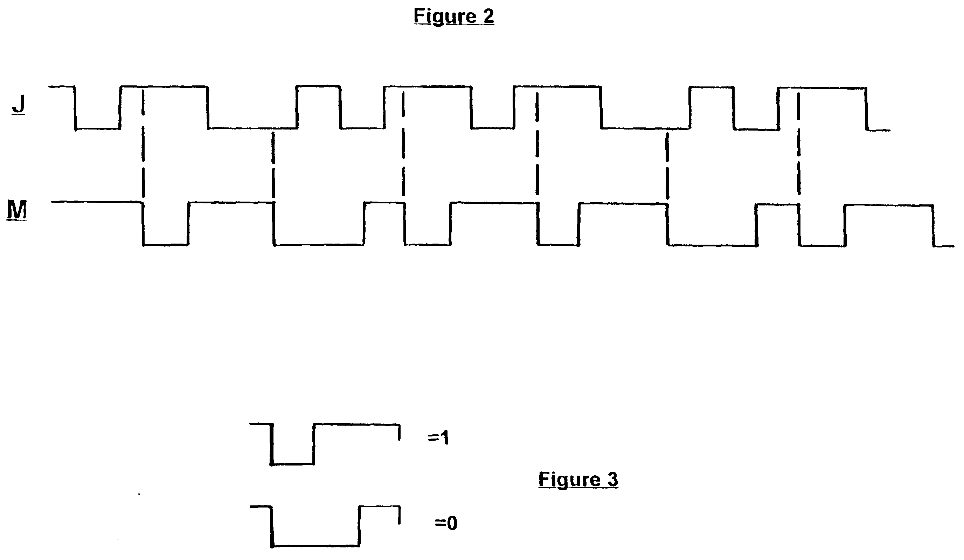

Referring now also to figures 2 and 3, in normal operation data is transmitted serially on both lines using a "return to zero" (RZ) coding in which the line stays (or "idles") high until a signal is transmitted, when each bit begins with a low portion and ends with a high portion and has a centre portion which is high for a "1" and low for a "0". It can be seen from figure 2 that the data carried on the J line is binary 101101.

The signal on the M line is identical to the signal on the J line and carries the same data at the same data rate but is transmitted with a 180° phase lag which equates to a delay of δ after the signal on the J line, where δ=t/2 and t is the duration between successive falling edges of either line. The 1/2 bit delay δ is also used below to define the embedded clock functions used for the register clocks CKA, CKB, CKC.

The ASIC 10 derives the data inputs A1, B1, C1 and the clock inputs CKA, CKB, CKC from the signals on the J and M lines.

As the J and M lines "idle high", the registers A, B, C detect the start of a data byte by the first transition from high to low on the line J, M, in question. The byte is then read in using their respective clocks CKA, CKB, CKC.

In register A, the signal on the J line is applied directly to the data input A1 to register A, and the signal on the M line is applied directly to the clock input CKA. As can be seen in Figure 2, each falling edge in the signal on the M line coincides with the centre portion of the corresponding bit in the signal on the J line. Therefore, on each falling edge in the signal on the M line, the level of the signal on the J line is stored as a bit of data DA in the register, as a "1" if it is high, and a "0" if it is low. The signal on the M line therefore acts as a clock to time the input of data from the J line into the register.

In register B, the signal on the J line is applied directly to the data input B1. The signal on the J line is also applied to the clock input CKB, but after a time delay of δ from when it is applied to the data input. The signal on the J line can therefore be input as data DB to the register B in a similar way to the input to register A, but using the falling edges between the bits on the J line as an embedded clock to time the input of data from the data input. The signal on the J line therefore becomes the data DB held in register B.

In register C, the signal on the M line is applied directly to the data input C1, and is applied to the clock input CKC after a time delay of δ from when it is applied to the data input. The data in the signal on the M line can therefore be entered as data DC in the register C in the same way as data is input to register B.

The validity of the data DA, DB, DC in each register A, B, C is checked using a checksum.

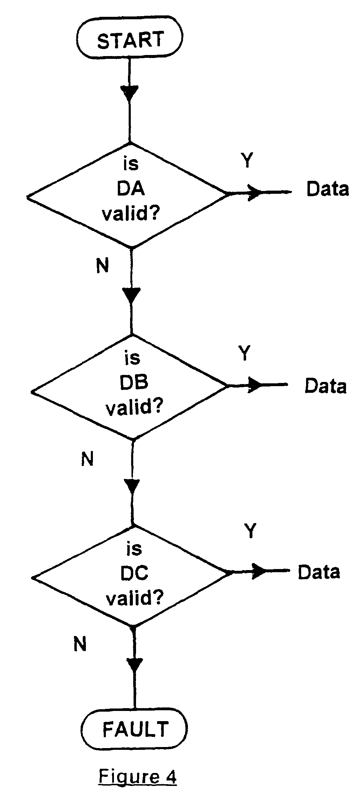

In figure 4, the decision making process for data selection between the shift registers A, B, C is shown and the ASIC 12 automatically configures itself to read the data present in the highest priority shift register A, B, C which holds valid data DA, DB, DC.

If data DA is valid, operation of the serial link 11 is in synchronous mode and information is passed through the first shift register A with a flexible bit rate. The data in the other registers B, C is ignored. This is a first operating mode (mode 1).

If data DA is invalid, the ASIC 12 will automatically reconfigure itself to operate in a second operating mode (mode 2). If both other data DB, DC are valid, operation of the serial link 11 defaults to a two wire redundant embedded clock with a substantially fixed bit rate.

The data is passed using either the J line or the M line and if the line J, M being used develops a fault, the slave will automatically reconfigure itself to read only the other line J, M. The clock CKB, CKC used is the embedded clock for the line J, M being used and the other line J, M with its clock CKB, CKC is redundant.

The ASIC 12 gives the second register B a higher priority than the third register C and, as the communications are asynchronous, the bit rate must be kept substantially fixed. In this case the data in register C is ignored.

If data DA and data DB are both invalid and data DC is valid, operation of the serial link 11 defaults to a single wire system with an embedded clock and communications are passed asynchronously through the third shift register C but again with a substantially fixed bit rate.

If all the data DA, DB, DC is invalid, then a total fault condition exists and communications cannot be established. The BCM 10 will log a fault condition and signal the fault to the user.

For ASIC 12 to BCM 10 communications the transmission varies with the operating mode and establishes true bidirectional data transfer. In both cases, the master transmits a header byte followed by a series of "1"s and the slave responds by modifying some of the "1"s to "0"s to produce data which is received by the master.

In mode 1, which is synchronous, the timing of the ASIC 12 transmission of data on the J line is controlled by the falling edges in the signal on the M line.

In mode 2, which is asynchronous, the timing of the transmission of data by the ASIC, on whichever line is being used, is controlled by the falling edges between the bits in the signal transmitted by the BCM 10 on that line.

It will be appreciated that, as with BCM 10 to ASIC 12 transmissions, mode 1 requires both the J and M lines whereas mode 2 may operate on either the J or M line.

All the options can be implemented in the ASIC 12 with no requirement for accurate timing or a UART and with common master hardware. This means that a versatile serial link 11 may be provided which can provide a particular mode of operation depending on the requirements of the application thereof.

In this way it can be seen that data transmission can be more reliably maintained by the present invention since although synchronous transmission is advantageous for example due to desirable noise thresholds, it is an unreliable mode which breaks down on failure of any one of a plurality of lines, whereas the present invention provides automatic reconfiguration to an asynchronous mode in the event of a breakdown in serial communications.

## Claims

1. An electrical data transmission system comprising first and second nodes (10, 12) connected by a serial link (11) which includes at least two lines (J ,M), wherein the system is operable in a first synchronous operating mode in which one of the lines acts as a data line and .another of the lines (J, M) acts as a synchronising line, and the system is also operable in a second asynchronous operating mode in which the second node (12) is adapted to receive data asynchronously from one of the lines (J, M), and the link (11) is arranged normally to operate in the synchronous mode, and automatically to be reconfigured to operate in the asynchronous mode on detecting one of the lines (J, M) as inoperative, the asynchronous data using the other of the lines (J, M).

2. An electrical system according to claim 1 further **characterised in that** the second node (12) is arranged such that it can receive data from either line (J, M) in the asynchronous mode.

3. An electrical system according to claim 1 or claim 2 further **characterised in that** in the synchronous operating mode, signals can be sent between the nodes (10, 12) in either direction.

4. An electrical system according to any one of claims 1 to 3 further **characterised in that** in the asynchronous operating mode, the system is arranged to transmit signals between the first and second nodes (10, 12) in either direction.

5. An electrical system according to any foregoing claim further **characterised in that** the second node (12) has means operative to distinguish between a line (J, M) carrying data and an inoperative line.

6. An electrical system according to any preceding claim further **characterised in that** at least one of the lines (J, M) is adapted to carry data in encoded form, the data including an embedded clock.

7. A method of operating a serial link (11) for the transmission of data, the link (11) having at least two lines (J, M) interconnecting first and second nodes (10, 12) the method comprises transmitting data synchronously over the lines (J, M) in a normal mode of operation with one of the lines (J, M) acting as a data line and another as a synchronising line and, if one of the lines (J, M) fails, transmitting data asynchronously over the or at least one of the remaining lines (J, M) in a failure mode.

8. A method according to claim 7 further **characterised in that** data is transmitted in either direction between the first and second node (10, 12) in the synchronous mode.

9. A method according to claim 7 or claim 8 further **characterised in that** data is transmitted in either direction between the first and second node (10, 12) in the asynchronous mode.

10. A method according to any one of claims 7 to 9 further **characterised in that** the method includes detecting line (J, M) failure and, in response to such failure detection, automatically reconfiguring the second node (12) to read received data asynchronously.

11. A method according to any one of claims 7 to 10, further **characterised in that** the data transmitted in the normal mode is the same as the data transmitted in the failure mode.

12. A method according to any one of claims 7 to 11 further **characterised in that** the method includes in the failure mode, reading the signal level of the transmitted data at a predetermined delay δ after a signal level transition in a predetermined direction.

## Patentansprüche

1. Elektrisches Datenübertragungssystem mit einem ersten und einem zweiten Knoten (10, 12), die durch eine serielle Verbindung (11) verbunden werden, die mindestens zwei Leitungen (J, M) enthält, wobei das System in einer ersten, synchronen Betriebsart betreibbar ist, in der eine der Leitungen als eine Datenleitung und eine andere der Leitungen (J, M) als eine Synchronisierungsleitung wirkt, und das System außerdem in einer zweiten, asynchronen Betriebsart betreibbar ist, in der der zweite Knoten (12) so ausgelegt ist, daß er Daten asynchron von einer der Leitungen (J, M) empfängt, und die Verbindung (11) so angeordnet ist, daß sie normalerweise in der synchronen Betriebsart arbeitet und automatisch auf die asynchrone Betriebsart umkonfiguriert wird, wenn eine der Leitungen (J, M) als außer Betrieb erkannt wird, wobei die asynchronen Daten die andere der Leitungen (J, M) verwenden.

2. Elektrisches System nach Anspruch 1, weiterhin **dadurch gekennzeichnet, daß** der zweite Knoten (12) so angeordnet ist, daß er Daten in der asynchronen Betriebsart aus einer beliebigen der Leitungen (J, M) empfangen kann.

3. Elektrisches System nach Anspruch 1 oder Anspruch 2, weiterhin **dadurch gekennzeichnet, daß** in der synchronen Betriebsart Signale in beiden Richtungen zwischen den Knoten (10, 12) gesendet werden können.

4. Elektrisches System nach einem der Ansprüche 1 bis 3, weiterhin **dadurch gekennzeichnet, daß** das System in der asynchronen Betriebsart so angeordnet ist, daß es Signale in beiden Richtungen zwischen dem ersten und dem zweiten Knoten (10, 12) sendet.

5. Elektrisches System nach einem der vorhergehenden Ansprüche, weiterhin **dadurch gekennzeichnet, daß** der zweite Knoten (12) Mittel aufweist, die wirken, um zwischen einer Leitung (J, M), die Daten führt, und einer außer Betrieb befindlichen Leitung zu unterscheiden.

6. Elektrisches System nach einem der vorhergehenden Ansprüche, weiterhin **dadurch gekennzeichnet, daß** mindestens eine der Leitungen (J, M) so ausgelegt ist, daß sie Daten in codierter Form führt, wobei die Daten einen eingebetteten Takt enthalten.

7. Verfahren zum Betrieb einer seriellen Verbindung (11) zur Übertragung von Daten, wobei die Verbindung (11) mindestens zwei Leitungen (J, M) aufweist, die einen ersten und einen zweiten Knoten (10, 12) verbinden und das Verfahren folgendes umfaßt: synchrones Übertragen von Daten über die Leitungen (J, M) in einer normalen Betriebsart, wobei eine der Leitungen (J, M) als eine Datenleitung und eine andere als eine Synchronisierungsleitung wirkt, und, wenn eine der Leitungen (J, M) ausfällt, asynchrones Übertragen von Daten über die oder mindestens eine der übrigen Leitungen (J, M) in einer Ausfallbetriebsart.

8. Verfahren nach Anspruch 7, weiterhin **dadurch gekennzeichnet, daß** in der synchronen Betriebsart Daten in beiden Richtungen zwischen dem ersten und dem zweiten Knoten (10, 12) übertragen werden.

9. Verfahren nach Anspruch 7 oder Anspruch 8, weiterhin **dadurch gekennzeichnet, daß** in der asynchronen Betriebsart Daten in beiden Richtungen zwischen dem ersten und dem zweiten Knoten (10, 12) übertragen werden.

10. Verfahren nach einem der Ansprüche 7 bis 9, weiterhin **dadurch gekennzeichnet, daß** das Verfahren das Erkennen eines Ausfalls der Leitung (J, M) umfaßt und als Reaktion auf eine solche Ausfallerkennung der zweite Knoten (12) automatisch so umkonfiguriert wird, daß er empfangene Daten asynchron liest.

11. Verfahren nach einem der Ansprüche 7 bis 10, weiterhin **dadurch gekennzeichnet, daß** die in der normalen Betriebsart übertragenen Daten dieselben wie die in der Ausfallbetriebsart übertragenen Daten sind.

12. Verfahren nach einem der Ansprüche 7 bis 11, weiterhin **dadurch gekennzeichnet, daß** das Verfahren in der Ausfallbetriebsart das Lesen des Signalpegels der übertragenen Daten mit einer vorbestimmten Verzögerung nach einem Signalpegelübergang in einer vorbestimmten Richtung umfaßt.

## Revendications

1. Système électrique de transmission de données, comprenant des premier et deuxième noeuds (10, 12) connectés par une liaison série (11) comportant au moins deux lignes (J, M), le système pouvant fonctionner dans un premier mode de fonctionnement synchrone dans lequel une des lignes fait office de ligne de données et une autre parmi les lignes (J, M) fait office de ligne synchrone, le système pouvant également fonctionner dans un deuxième mode asynchrone, dans lequel le deuxième noeud (12) est adapté pour recevoir des données de façon asynchrone en provenance d'une des lignes (J, M), et la liaison (11) est normalement arrangée pour fonctionner en mode synchrone et automatiquement reconfigurée pour fonctionner en mode asynchrone lorsqu'il est détecté qu'une des lignes (J, M) est inexploitable, les données asynchrones utilisant l'autre parmi les lignes (J, M).

2. Système électrique selon la revendication 1, **caractérisé en outre en ce que** le deuxième noeud (12) est arrangé de manière à pouvoir recevoir des données en provenance de l'une ou l'autre ligne (J, M) en mode asynchrone.

3. Système électrique selon la revendication 1 ou la revendication 2, **caractérisé en outre en ce que**, en mode de fonctionnement synchrone, des signaux peuvent être envoyés entre les noeuds (10, 12) dans l'une ou l'autre direction.

4. Système électrique selon l'une quelconque des revendications 1 à 3, **caractérisé en outre en ce que**, en mode de fonctionnement asynchrone, le système est arrangé pour transmettre des signaux entre les premier et deuxième noeuds (10, 12) dans l'une ou l'autre direction.

5. Système électrique selon l'une quelconque des revendications précédentes, **caractérisé en outre en ce que** le deuxième noeud (12) dispose d'un moyen pouvant fonctionner pour faire la distinction entre une ligne (J, M) véhiculant des données et une ligne inexploitable.

6. Système électrique selon l'une quelconque des revendications précédentes, **caractérisé en outre en ce qu'**au moins une des lignes (J, M) est adaptée pour véhiculer des données sous forme codée, les données comportant une horloge intégrée.

7. Procédé d'exploitation d'une liaison série (11) pour la transmission de données, la liaison (11) comprenant au moins deux lignes (J, M) interconnectant des premier et deuxième noeuds (10, 12), le procédé comprenant la transmission synchrone de données sur les lignes (J, M) dans un mode de fonctionnement normal, l'une des lignes (J, M) faisant office de ligne de données et une autre faisant office de ligne de synchronisation et, en cas de défaillance d'une des lignes (J, M), la transmission asynchrone de données sur la ou l'une au moins des lignes restantes (J, M) dans un mode de défaillance.

8. Procédé selon la revendication 7, **caractérisé en outre en ce que** les données sont transmises dans l'une ou l'autre direction entre les premier et deuxième noeuds (10, 12) en mode synchrone.

9. Procédé selon la revendication 7 ou la revendication 8, **caractérisé en outre en ce que** les données sont transmises dans l'une ou l'autre direction entre les premier et deuxième noeuds (10, 12) en mode asynchrone.

10. Procédé selon l'une quelconque des revendications 7 à 9, **caractérisé en outre en ce que** le procédé comporte la détection d'une défaillance d'une ligne (J, M) et, en réponse à cette détection d'une défaillance, la reconfiguration automatique du deuxième noeud (12) pour qu'il procède à la lecture asynchrone des données reçues.

11. Procédé selon l'une quelconque des revendications 7 à 10, **caractérisé en outre en ce que** les données transmises en mode normal sont identiques aux données transmises en mode de défaillance.

12. Procédé selon l'une quelconque des revendications 7 à 11, **caractérisé en outre en ce qu'**il comporte, en mode de défaillance, la lecture du niveau de signal des données transmises avec un retard prédéterminé δ suite à une transition de niveau de signal dans une direction prédéterminée.
